# EUROPÄISCHE PATENTSCHRIFT

(11) **EP 3 772 450 B1**
(45) Veröffentlichungstag und Bekanntmachung des Hinweises auf die Patenterteilung: **29.10.2025**
(21) Anmeldenummer: 20181235.1
(22) Anmeldetag: 19.06.2020
(51) Int. Cl.: B62J 17/00, B62J 17/08, B62K 7/00

(54) **TRANSPORTFAHRRAD MIT GESCHLOSSENE KABINE UND DAS MIT MUSKELKRAFT UND/ODER MITTELS ELEKTRISCHEM ANTRIEB ABTREIBBAR IST**
TRANSPORT BICYCLE WITH CLOSED CABIN WHICH IS DRIVABLE WITH MUSCLE FORCE AND / OR BY MEANS OF ELECTRIC DRIVE
VÉLO DE TRANSPORT AVEC CABINE FERMÉE ET POUVANT ÊTRE CONDUIT AVEC UNE PUISSANCE MUSCULAIRE ET / OU AU MOYEN D'UN ENTRAÎNEMENT ÉLECTRIQUE

(30) Priorität: 05.08.2019 DE 102019121141
(43) Veröffentlichungstag der Anmeldung: 10.02.2021
(73) Patentinhaber: ONO GmbH, 33378 Rheda-Wiedenbrück (DE)
(72) Erfinder: Kahle, Philipp, 13353 Berlin (DE)
(74) Vertreter: Schorr, Peter Karl

(56) Entgegenhaltungen:
- EP-A1- 1 259 417
- DE-A1- 102016 115 803
- DE-B3- 102017 005 699
- DE-U1- 202006 014 365
- FR-A1- 2 929 585
- IT-A1- VI20 110 061

## Beschreibung

Die Erfindung betrifft ein Transportfahrrad, das mittels Muskelkraft und/oder mittels elektrischem Antrieb antreibbar ist, mit mindestens einem Aufnahmebereich, in oder an dem mindestens ein Wechselbehälter und/oder eine Zusatzlast anordenbar oder angeordnet ist, und mit mindestens einem Fahrerbereich, der bezüglich der Fahrtrichtung des Transportfahrrads vor dem Aufnahmebereich angeordnet ist und der mindestens eine Sitzeinheit, eine Pedaleinheit, eine Lenkeinheit, ein zumindest den Fahrerbereich überfangendes Dachelement und ein den Fahrerbereich in Richtung Fahruntergrund zumindest bereichsweise begrenzendes Bodenmittel einer Bodeneinheit umfasst, wobei Bodenmittel und Dachelement zumindest bereichsweise einen Abstand zueinander aufweisen, der zumindest die Körpergröße einer Bedienperson umfasst, um ein Beladen und Entladen des Aufnahmebereichs durch eine im Fahrerbereich aufrecht stehend angeordnete Bedienperson zu unterstützen, wobei das Bodenmittel eine geschlossene Fläche bildet, durch die der Fahrerbereich zum Fahruntergrund in Gänze begrenzt ist.

Transportfahrräder sind in unterschiedlichen Ausführungsformen bekannt. Diese können beispielsweise in Form einer Rikscha zum Transport von Personen dienen oder als Lastenfahrrad zum Transport von Containern, Behältern oder sonstigen Zusatzlasten dienen.

Hierbei können die Transportfahrräder beispielsweise ausschließlich mittels Muskelkraft betrieben werden oder durch einen elektrischen Antrieb zumindest geringfügig unterstützt werden.

Zum Beladen und wieder Entladen der Transportfahrräder, ist regelmäßig ein manuelles Bestücken des Aufnahmebereichs des Transportfahrrades erforderlich. Dieses erweist sich bei den bekannten Transportfahrrädern insbesondere aus Richtung des Fahrerbereichs als umständlich, der einen Zugang des Aufnahmebereichs im Wesentlichen blockiert.

Darüber hinaus ist das Mitführen weiterer Personen bei als Lastenfahrräder ausgebildeten Transportfahrrädern begrenzt.

Ein gattungsgemäßes Transportfahrrad ist bekannt aus DE 20 2006 014 365 U1.

Ein Transportfahrrad ist jeweils bekannt aus FR 2 929 585 A1, EP 1 259 417 A0 und DE 43 06 094 A1, bei denen jeweils ein Abstand zwischen einem Bodenmittel und einem Dachelement für ein Sitzen im Fahrerbereich ausreichend, aber für ein Stehen im Fahrerbereich zu gering ist.

Eine Aufgabe eines Ausführungsbeispiels der Erfindung ist, ein Transportfahrrad vorzuschlagen, bei dem die Zugänglichkeit des Aufnahmebereichs verbessert ist.

Diese Aufgabe wird gelöst durch ein Transportfahrrad, das mittels Muskelkraft und/oder mittels elektrischen Antrieb antreibbar ist, bei dem der Fahrerbereich eine im Wesentliche nach Außen geschlossenen Kabine umfasst, die quer oder schräg zur Fahrtrichtung eine Öffnung umfasst, durch die der Fahrerbereich von außen zugänglich ist.

Dadurch, dass das Bodenmittel und das Dachelement zumindest bereichsweise einen Abstand zueinander aufweisen, der zumindest die Körpergröße einer Bedienperson umfasst, ist der Aufnahmebereich auf einfache Weise auch vom Fahrerbereich zugänglich. Hierdurch kann ein Beladen und Entladen des Aufnahmebereichs vereinfacht sein.

Dadurch, dass das Bodenmittel eine geschlossene Fläche bildet, durch die der Fahrerbereich zum Fahruntergrund überwiegend begrenzt ist, wird durch das Bodenmittel gleichzeitig ein Spritzschutz bereitgestellt. Hierdurch ist ein Eindringen von Schmutz und Feuchtigkeit in den Fahrerbereich, beispielsweise beim Fahren des Transportfahrrads auf feuchtem Untergrund, zumindest reduziert.

Das Bodenmittel kann beispielsweise steigeisenartig oder stufenartig ausgebildet sein und nur in dem Bereich des Fahrerbereichs angeordnet sein, der dem Aufnahmebereich zugewandt ist.

Das Transportfahrrad kann beispielsweise muskelkraftbetrieben und/oder elektrisch antreibbar sein. Solchenfalls kann es ein so genanntes Lasten-Pedelec umfassen.

Wenn das Bodenmittel und das Dachelement nur in einem Bereich einen Abstand zueinander aufweisen, der zumindest die Körpergröße einer Bedienperson umfasst, erweist es sich als vorteilhaft, wenn dieser Bereich auf der dem Aufnahmebereich zugewandten Seite des Fahrerbereichs angeordnet ist. Hierdurch kann gewährleistet werden, dass die Bedienperson im Fahrerbereich aufrecht stehen kann, während der Wechselbehälter und/oder die Zusatzlast im Aufnahmebereich angeordnet oder dort wieder entfernt wird.

Dadurch dass Fahrerbereich eine im Wesentliche nach Außen geschlossenen Kabine umfasst, ist die Möglichkeit eines Eindringens von Schmutz und/oder Feuchtigkeit in den Fahrerbereich weiter reduziert.

Es sind Ausführungsformen des Transportfahrrads denkbar, bei denen der Abstand zwischen Bodenmittel und Dachelement mindestens 1,70 m, insbesondere mindestens 1,80 m, insbesondere mindestens 1,90 m, insbesondere mindestens 2,00 m umfasst.

Bei einer Ausführungsform des Transportfahrrads ist vorgesehen, dass zumindest die Sitzeinheit und/oder die Lenkeinheit am Bodenmittel festlegbar oder festgelegt sind.

Solchenfalls dient das Bodenmittel zusätzlich als Tragelement beispielsweise einer Rahmenkonstruktion des Transportfahrrads. Hierdurch kann auf zusätzliche Tragstreben verzichtet werden, die die Sitzeinheit und/oder die Lenkeinheit im Fahrerbereich des Transportfahrrads festlegen.

Um eine Unfallgefahr und/oder die Gefahr eines Verletzens von Bedienpersonal beim Betrieb des Transportfahrrads zu reduzieren, erweist es sich als vorteilhaft, wenn das Bodenmittel auf der dem Fahrerbereich zugewandten Seite zumindest abschnittsweise eine Rauigkeit steigernde Beschichtung umfasst.

Hierdurch ist die Rutschfestigkeit des Bodenmittels steigerbar, wodurch ein Ausrutschen oder Abgleiten der Bedienperson beim Stehen, Besteigen oder Aussteigen im, in oder aus dem Fahrerbereich reduzierbar ist.

Ferner erweist es sich als vorteilhaft, wenn das Bodenmittel mindestens eine Ablaufeinrichtung umfasst, durch die ein Fluid aus dem Fahrerbereich ablaufbar ist.

Hierdurch ist gewährleistet, dass wenn beispielsweise eine Bedienperson bei Regen den Fahrerbereich verlässt und wieder betritt, von der Bedienperson abtropfendes Wasser aus dem Fahrerbereich abführbar ist.

Hierdurch ist eine Pfützenbildung im Fahrerbereich reduziert, wodurch die Sicherheit der Bedienperson weiter steigerbar ist.

Wenn das Transportfahrrad zum Transport von Wechselbehältern oder Dergleichen verwendet wird und hierbei zusätzlich zur Bedienperson eine weitere Bedienperson vorgesehen ist, kann es sich als vorteilhaft erweisen, wenn das Bodenmittel mindestens einen Trittabschnitt umfasst, der insbesondere im Bereich der Öffnung und aus dem Fahrerbereich herausragend ausgebildet ist.

Der Trittabschnitt kann trittbrettartig ausgebildet sein.

Grundsätzlich ist es denkbar, dass der Wechselbehälter in einen eine durchgehende Öffnung umfassenden Aufnahmebereich eingeschoben und dort fixiert wird. Hierbei kann der Wechselbehälter zum Transport angehoben werden oder Reifen oder Rollen umfassen, mit denen der Wechselbehälter mit dem Transportfahrrad bewegbar ist. Bei einer Ausführungsform des Transportfahrrads ist vorgesehen, dass die Bodeneinheit mindestens einen zumindest den Aufnahmebereich in Richtung Fahruntergrund begrenzenden flächenhaften Aufnahmeboden umfasst, durch die der Aufnahmebereich zum Fahruntergrund in Gänze oder zumindest nahezu überwiegend begrenzbar oder begrenzt ist.

Solchenfalls kann der Wechselbehälter auf einfache Weise auf den flächenhaften Aufnahmeboden aufgeschoben werden.

In Weiterbildung letztgenannter Ausführungsform erweist es sich als vorteilhaft, wenn das Bodenmittel und der Aufnahmeboden ein gemeinsames, einstückiges Bauteil umfassen.

Solchenfalls kann das Transportfahrrad kompakt und bauteilreduziert ausgebildet werden.

Darüber hinaus ist bei einer Ausführungsform des Transportfahrrads vorgesehen, dass das Bodenmittel und/oder der Aufnahmeboden auf einer dem Fahruntergrund zugewandten oder abgewandten Seite an einer Tragstruktur des Transportfahrrads, an der mindestens eine Radeinheit anordenbar oder angeordnet ist, festlegbar oder festgelegt ist.

Wenn das Bodenmittel und/oder der Aufnahmeboden auf einer dem Fahruntergrund zugewandten Seite an einer Tragstruktur des Transportfahrrads festgelegt ist, ist das Transportfahrrad bezüglich seiner Bauhöhe tiefergelegt. Hierdurch ist der Luftwiderstand des Transportfahrrads reduzierbar.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Transportfahrrads.

In der Zeichnung zeigt:
- Figur 1: Eine perspektivische Frontansicht auf ein Ausführungsbeispiel des Transportfahrrads;
- Figur 2: Eine perspektivische Seitenansicht auf einen Fahrerbereich des Transportfahrrads gemäß Figur 1.

Die Figuren zeigen ein Ausführungsbeispiel eines insgesamt mit dem Bezugszeichen 2 versehenen Transportfahrrads. Das Transportfahrrad 2 ist mittels Muskelkraft und/oder mittels elektrischem Antrieb antreibbar. Das Transportfahrrad 2 umfasst einen Aufnahmebereich 4, in dem mindestens ein Wechselbehälter (in den Figuren nicht dargestellt) und/oder eine Zusatzlast anordenbar oder angeordnet ist. Darüber hinaus umfasst das Transportfahrrad 2 einen Fahrerbereich 6, der bezüglich der Fahrtrichtung 9 des Transportfahrrads 2 vor dem Aufnahmebereich 4 angeordnet ist.

Im Fahrerbereich 6 ist eine Sitzeinheit 8, eine Pedaleinheit 10, eine Lenkeinheit 12, ein zumindest den Fahrerbereich 6 überfangenes Dachelement 14 sowie ein den Fahrerbereich 6 in Richtung Fahruntergrund 16 zumindest bereichsweise begrenzendes Bodenmittel 18 einer Bodeneinheit 20.

Bei dem in den Figuren gezeigten Ausführungsbeispiel des Transportfahrrads 2 weisen Bodenmittel 18 und Dachelement 14 einen Abstand zueinander auf, der mindestens die Körpergröße einer Bedienperson umfasst.

Das Bodenmittel 18 umfasst eine geschlossene Fläche.

Hierdurch ist der Fahrerbereich 6 zum Fahruntergrund 18 überwiegend begrenzt. Die Sitzeinheit 8 und die Lenkeinheit 12 sind am Bodenmittel 18 festgelegt.

Der Fahrerbereich 6 umfasst eine nach außen zumindest nahezu geschlossene Kabine. Diese weist quer zur Fahrtrichtung 8 eine Öffnung 22 auf, durch die der Fahrerbereich 6 von außen zugänglich ist.

Neben dem Bodenmittel 18 umfasst die Bodeneinheit 20 im Aufnahmebereich 4 ein den Aufnahmebereich 4 in Richtung Fahruntergrund 16 begrenzenden flächenhaften Aufnahmeboden 24. Auf dem Aufnahmeboden 24 ist ein Wechselbehälter und/oder eine Zusatzlast anordenbar.

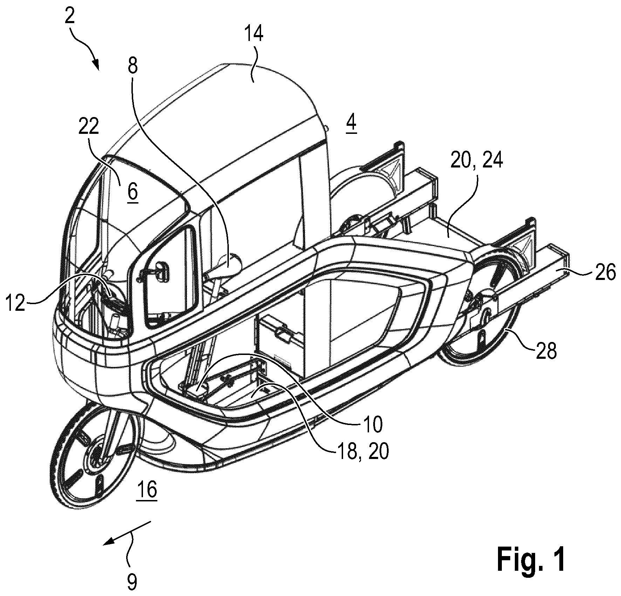

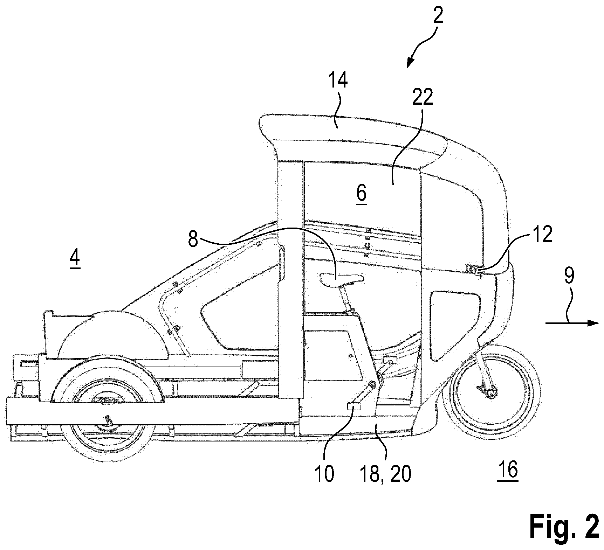

Die Figuren 1 und 2 zeigen ein Ausführungsbeispiel des Transportfahrrads 2, bei dem Aufnahmeboden 24 und Bodenmittel 18 ein gemeinsames, einstückiges Bauteil umfassen. Bodenmittel 18 und Aufnahmeboden 24 sind bezüglich einer Tragstruktur 26 des Transportfahrrads 2, an der mindestens eine Radeinheit 28 anordenbar ist, auf einer dem Fahruntergrund 16 zugewandten Seite festgelegt. Hierdurch umfasst das Transportfahrrad 2 eine besonders geringe Höhe.

Im Folgenden wird die Funktionsweise des Transportfahrrads 2 beschrieben: Zum Be- oder Entladen des Aufnahmebereichs 4 kann ein Bediener des Transportfahrrads 2 im Fahrerbereich 6 angeordnet sein und aufrecht stehend beim Beladen des Aufnahmebereichs 4 unterstützen. Gleiches gilt für das Entladen des Aufnahmebereichs 4, bei dem ein Bediener des Transportfahrrads 2 vom Fahrerbereich 6 aus den Wechselbehälter und/oder die Zusatzlast rangieren kann.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein. Der Geltungsbereich der Erfindung ist durch die beiliegenden Ansprüche definiert.

### Bezugszeichenliste

- 2: Transportfahrrad
- 4: Aufnahmebereich
- 6: Fahrerbereich
- 8: Sitzeinheit
- 9: Fahrtrichtung
- 10: Pedaleinheit
- 12: Lenkeinheit
- 14: Dachelement
- 16: Fahruntergrund
- 18: Bodenmittel
- 20: Bodeneinheit
- 22: Öffnung
- 24: Aufnahmeboden
- 26: Tragstruktur
- 28: Radeinheit

## Patentansprüche

1. Transportfahrrad (2), das mittels Muskelkraft und/oder mittels elektrischen Antrieb antreibbar ist, mit mindestens einem Aufnahmebereich (4), in oder an dem mindestens ein Wechselbehälter und/oder eine Zusatzlast anordenbar oder angeordnet ist, und mit mindestens einem Fahrerbereich (6), der bezüglich der Fahrtrichtung (9) des Transportfahrrads (2) vor dem Aufnahmebereich (4) angeordnet ist und der mindestens eine Sitzeinheit (8), eine Pedaleinheit (10), eine Lenkeinheit (12), ein zumindest den Fahrerbereich (6) überfangendes Dachelement (14) und ein den Fahrerbereich (6) in Richtung Fahruntergrund (16) zumindest bereichsweise begrenzendes Bodenmittel (18) einer Bodeneinheit (20) umfasst, wobei das Bodenmittel (18) und Dachelement (14) zumindest bereichsweise einen Abstand zueinander aufweisen, der zumindest die Körpergröße einer Bedienperson umfasst, um ein Beladen und Entladen des Aufnahmebereichs (4) durch eine im Fahrerbereich (6) aufrecht stehend angeordnete Bedienperson zu unterstützen, wobei das Bodenmittel (18) eine geschlossene Fläche bildet, durch die der Fahrerbereich (6) zum Fahruntergrund (16) in Gänze begrenzt ist, **dadurch gekennzeichnet, dass** der Fahrerbereich (6) eine im Wesentlichen nach Außen geschlossenen Kabine umfasst, die quer oder schräg zur Fahrtrichtung (9) eine Öffnung (22) umfasst, durch die der Fahrerbereich (6) von außen zugänglich ist.

2. Transportfahrrad (2) nach Anspruch 1, **dadurch gekennzeichnet, dass** der Abstand zwischen Bodenmittel (18) und Dachelement (14) mindestens 1,70 m, insbesondere mindestens 1,80 m, insbesondere mindestens 1,90 m, insbesondere mindestens 2,00 m umfasst.

3. Transportfahrrad (2) nach Anspruch 1 oder 2, **dadurch gekennzeichnet, dass** zumindest die Sitzeinheit (8) und/oder die Lenkeinheit (12) am Bodenmittel (18) festlegbar oder festgelegt sind.

4. Transportfahrrad (2) nach mindestens einem der vorhergehenden Ansprüche, **dadurch gekennzeichnet, dass** das Bodenmittel (18) auf der dem Fahrerbereich (6) zugewandten Seite zumindest abschnittsweise eine Rauigkeit steigernde Beschichtung umfasst.

5. Transportfahrrad (2) nach mindestens einem der vorhergehenden Ansprüche, **dadurch gekennzeichnet, dass** das Bodenmittel (18) mindestens eine Ablaufeinrichtung umfasst, durch die ein Fluid aus dem Fahrerbereich (6) ablaufbar ist.

6. Transportfahrrad (2) nach mindestens einem der vorhergehenden Ansprüche, **dadurch gekennzeichnet, dass** das Bodenmittel (18) mindestens einen Trittabschnitt umfasst, der insbesondere im Bereich der Öffnung (22) und aus dem Fahrerbereich (6) herausragend ausgebildet ist.

7. Transportfahrrad (2) nach mindestens einem der vorhergehenden Ansprüche, **dadurch gekennzeichnet, dass** die Bodeneinheit (20) mindestens einen zumindest den Aufnahmebereich (4) in Richtung Fahruntergrund (16) begrenzenden flächenhaften Aufnahmeboden (24) umfasst, durch die der Aufnahmebereich (4) zum Fahruntergrund (16) in Gänze oder zumindest nahezu überwiegend begrenzbar oder begrenzt ist.

8. Transportfahrrad (2) nach Anspruch 7, dadurch durch gekennzeichnet, dass das Bodenmittel (18) und der Aufnahmeboden (24) ein gemeinsames einstückiges Bauteil umfassen,

9. Transportfahrrad (2) nach Anspruch 7 oder 8, **dadurch gekennzeichnet, dass** das Bodenmittel (18) und/oder der Aufnahmeboden (24) auf einer dem Fahruntergrund (16) zugewandten oder abgewandten Seite an einer Tragstruktur des Transportfahrrads (2), an der mindestens eine Radeinheit (28) anordenbar oder angeordnet ist, festlegbar oder festgelegt ist.

## Claims

1. Transport bicycle (2) that can be driven using muscle power and/or an electrical drive, with at least one receiving area (4), in or on which at least one swap body and/or an additional load can be arranged or is arranged, and with at least one rider area (6) that is arranged in relation to the direction of travel (9) of the transport bicycle (2) in front of the receiving area (4) and that has at least one seat unit (8), one pedal unit (10), one steering unit (12), a roof element (14) overhanging at least the rider area (6) and a base means (18) of a base unit (20) that at least partially delimits the rider area (6) in the direction of the riding surface (16), wherein the base means (18) and roof element (14) have a distance to one another at least in some areas that is at least the body size of an operator in order to support the loading and unloading of the receiving area (4) by an operator standing upright in the rider area (6), wherein the base means (18) forms an enclosed surface by which the rider area (6) is completely delimited to the riding surface (16), **characterised in that** the rider area (6) forms a cabin that is essentially closed to the outside, with an opening (22) across or at an angle to the direction of travel (9), through which the rider area (6) is accessible from the outside.

2. Transport bicycle (2) according to claim 1, **characterised in that** the distance between the base means (18 and roof element (14) is at least 1.70 m, in particular at least 1.80 m, in particular at least 1.90 m, in particular at least 2.00 m.

3. Transport bicycle (2) according to claim 1 or 2, **characterised in that** at least the seat unit (8) and/or the steering unit (12) can be fixed or are fixed to the base means (18).

4. Transport bicycle (2) according to at least one of the previous claims, **characterised in that** the base means (18) on the side facing the rider area (6) has a roughness-enhancing coating in at least some sections.

5. Transport bicycle (2) according to at least one of the previous claims, **characterised in that** the base means (18) has at least one drainage device through which a fluid can run off from the rider area (6).

6. Transport bicycle (2) according to at least one of the previous claims, **characterised in that** the base means (18) has at least one step section, in particular in the area of the opening (22) and that extends from the rider area (6)

7. Transport bicycle (2) according to at least one of the previous claims, **characterised in that** the base unit (20) has at least one flat receiving base (24) that delimits the receiving area (4) in the direction of the riding surface (16), through which the receiving area (4) can be delimited or is delimited as a whole or at least almost predominantly to the riding surface (16).

8. Transport bicycle (2) according to claim 7, **characterised in that** the base means (18) and the receiving base (24) include a common single-piece component,

9. Transport bicycle (2) according to claim 7 or 8, **characterised in that** the base means (18) and/or the receiving base (24) can be fixed or are fixed on the side facing towards or away from the riding surface (16) to a support structure of the transport bicycle (2) on which at least one wheel unit (28) can be arranged or is arranged.

## Revendications

1. Vélo cargo (2) qui peut être entraîné par la force musculaire et/ou par un entraînement électrique, avec au moins une zone de réception (4) dans ou sur laquelle au moins un conteneur mobile et/ou une charge supplémentaire peuvent être disposés ou sont disposés, et avec au moins une zone de conduite (6), qui est disposée devant la zone de réception (4) par rapport à la direction de déplacement (9) du vélo cargo (2) et qui comprend au moins une unité de siège (8), une unité de pédales (10), une unité de direction (12), un élément de toit (14) recouvrant au moins la zone de conduite (6) et une plaque de plancher (18) d'une unité de plancher (20) délimitant au moins par zones la zone de conduite (6) en direction de la surface de roulement (16), la plaque de plancher (18) et l'élément de toit (14) présentant au moins par zones une distance l'un par rapport à l'autre qui comprend au moins la taille du corps d'un opérateur, afin de soutenir un chargement et un déchargement de la zone de réception (4) par un opérateur disposé debout dans la zone de conduite (6), la plaque de plancher (18) formant une surface fermée, par laquelle la zone de conduite (6) est entièrement délimitée par rapport à la surface de roulement (16), **caractérisée en ce que** la zone de conduite (6) comprend une cabine essentiellement fermée vers l'extérieur, qui comprend une ouverture (22) transversale ou oblique par rapport à la direction de déplacement(9), par laquelle la zone de conduite (6) est accessible de l'extérieur.

2. Vélo cargo (2) selon la revendication 1, **caractérisé en ce que** la distance entre la plaque de plancher (18) et l'élément de toit (14) comprend au moins 1,70 m, en particulier au moins 1,80 m, en particulier au moins 1,90 m, en particulier au moins 2,00 m.

3. Vélo cargo (2) selon la revendication 1 ou 2, **caractérisé en ce qu'**au moins l'unité de siège (8) et/ou l'unité de direction (12) peuvent être fixées ou sont fixées à la plaque de plancher (18).

4. Vélo cargo (2) selon au moins l'une des revendications précédentes, **caractérisé en ce que** la plaque de plancher (18) comprend, au moins par sections, un revêtement augmentant la rugosité sur le côté tourné vers la zone de conduite (6).

5. Vélo cargo (2) selon au moins l'une des revendications précédentes, **caractérisé en ce que** la plaque de plancher (18) comprend au moins un dispositif d'évacuation par lequel un fluide peut être évacué de la zone de conduite (6).

6. Vélo cargo (2) selon au moins l'une des revendications précédentes, **caractérisé en ce que** la plaque de plancher (18) comprend au moins une portion de marche, réalisée notamment au niveau de l'ouverture (22) et en saillie par rapport à la zone de conduite (6).

7. Vélo cargo (2) selon au moins l'une des revendications précédentes, **caractérisé en ce que** l'unité de plancher (20) comprend au moins un plancher de réception (24) en forme de surface qui délimite au moins la zone de réception (4) en direction de la surface de roulement (16) et par lequel la zone de réception (4) peut être délimitée ou est délimitée dans sa totalité ou au moins presque principalement par rapport à la surface de roulement (16).

8. Vélo cargo (2) selon la revendication 7, **caractérisé en ce que** la plaque de plancher (18) et le plancher de réception (24) comprennent un composant commun d'une seule pièce,

9. vélo cargo (2) selon la revendication 7 ou 8, **caractérisé en ce que** la plaque de plancher (18) et/ou le plancher de réception (24) peut être fixé ou est fixé sur un côté tourné vers ou opposé à la surface de roulement (16) sur une structure porteuse du vélo cargo (2), sur laquelle au moins une unité de roue (28) peut être disposée ou est disposée.
